# FASCICULE DE BREVET EUROPEEN

(11) **EP 3 853 773 B1**
(45) Date de publication et mention de la délivrance du brevet: **26.07.2023**
(21) Numéro de dépôt: 19763008.0
(22) Date de dépôt: 10.09.2019
(51) Int. Cl.: G06K 19/077

(54) **PROCEDE DE FABRICATION D'UN MODULE ELECTRONIQUE POUR OBJET PORTATIF**
VERFAHREN ZUR HERSTELLUNG EINES ELEKTRONISCHEN MODULS FÜR EIN TRAGBARES OBJEKT
METHOD FOR MANUFACTURING AN ELECTRONIC MODULE FOR A PORTABLE OBJECT

(30) Priorité: 18.09.2018 FR 1858425
(43) Date de publication de la demande: 28.07.2021
(73) Titulaire: Smart Packaging Solutions (SPS), 13790 Rousset (FR)
(72) Inventeur: CALVAS, Bernard, 13790 ROUSSET (FR); CASTANO, Philippe, 13790 ROUSSET (FR)
(74) Mandataire: Nicolle, Olivier
(86) Numéro de dépôt international: PCT/EP2019/074069
(87) Numéro de publication internationale: WO 2020/058036

(56) Documents cités:
- EP-A1- 2 825 001
- EP-A1- 2 871 595
- WO-A1-2014/006286

## Description

L'invention concerne un procédé de fabrication d'un module électronique pour un objet portatif comportant une fonction avec contact et/ou une fonction sans contact.

Elle est notamment utilisée pour la fabrication de modules électroniques destinés à des cartes possédant une fonction avec contact et/ou sans contact, ces cartes pouvant être des cartes duals, hybrides. Les cartes obtenues peuvent être utilisées dans le domaine de l'identité, de la santé, du transport, etc.

Un module électronique désigne en général une puce de circuit intégré fixée sur la face cachée (face opposée à la face du module en contact avec un lecteur) d'un boîtier de connexion au moyen d'un adhésif.

Les modules électroniques sont en général réalisés sur des circuits imprimés flexibles avec une ou deux couches en cuivre gravé et métallisé. Les plots de la puce du circuit intégré sont électriquement connectés aux plaques de contact du boîtier de connexion au moyen de fils conducteurs. Pour pouvoir relier électriquement le module électronique à un autre circuit électrique noyé dans un corps de carte, le module électronique comprend en outre une antenne ou une paire de plaques de contact internes à la puce, disposées sur la face cachée du boîtier de connexion. L'antenne est électriquement liée à la puce via des plots et au moyen de fils conducteurs (technique connue sous le terme anglo-saxon « wire bonding »). ou par une technique de connexion directe utilisant des bossages conducteurs ou « bump » (technique connue sous le terme anglo-saxon « flip chip »).

Ce type de technologie pour fabriquer un micromodule présente l'inconvénient d'être onéreux.

Le document EP2825001 divulgue une technique pour fabriquer un module électronique afin d'assurer une rigidité suffisante à tous les endroits du module qui présentent une faiblesse de tenue mécanique.

L'invention a notamment pour objectif de diminuer le coût de fabrication d'un module électronique tout en assurant les fonctions avec contact et/ou sans contact pour une utilisation donnée. A cet effet, on utilise un substrat souple faible coût que l'on va solidariser à un support électriquement conducteur pour constituer un boîtier de connexion d'un module électronique pour une carte comprenant une fonction contact et/ou une fonction sans contact.

L'invention concerne un procédé de fabrication d'un ou plusieurs modules électroniques caractérisé en ce qu'il comporte au moins les étapes suivantes :
Utiliser :
   Un substrat souple comportant plusieurs orifices traversant, et sur une première face au moins une zone électriquement conductrice, aux extrémités de laquelle se trouvent une ou plusieurs plages de connexion, et une deuxième face, et
   Un support électriquement conducteur comportant sur une première face une ou plusieurs zones de connexion, et une deuxième face,
Assembler la deuxième face dudit substrat souple à ladite deuxième face dudit support électriquement conducteur au moyen d'une couche adhésive, Positionner un circuit intégré sur ou au niveau de la première face dudit substrat,
Connecter un ou plusieurs contacts dudit circuit intégré à la ou aux zones de connexion via lesdits orifices de connexion, et aux plages de connexion, Déposer une couche de protection au niveau du circuit intégré.

On assemble le substrat souple au support électriquement conducteur avant de perforer l'ensemble formé par le substrat et la couche adhésive.

Selon un mode de réalisation, la zone électriquement conductrice est constituée de plusieurs spires formant une antenne. Les spires peuvent être en aluminium, constituées de cuivre ou encore d'une matière électriquement conductrice imprimée.

La zone électriquement conductrice est formée, par exemple, d'au moins deux zones de matériau conducteur disposées autour du circuit intégré.

Le support utilisé est par exemple un substrat en polyéthylène téréphtalate (PET) ou en Polychlorure de vinyle (PVC).

L'invention concerne aussi un module électronique selon la revendication 9.

Le substrat est, par exemple, réalisé en polyéthylène téréphtalate PET ou en Polychlorure de vinyle PVC.

Selon un mode de réalisation, la zone électriquement conductrice est une antenne formée par au moins une spire déposée sur au moins une face du substrat.

La zone électriquement conductrice peut être formée d'au moins deux zones de matériau conducteur disposées autour du circuit intégré.

L'invention concerne aussi un objet portatif tel qu'une carte comprenant un module électronique selon l'invention, le module étant disposé dans une cavité de la carte, et une antenne déposée dans le corps de la carte.

D'autres caractéristiques et avantages de la présente invention apparaîtront mieux à la lecture de la description d'exemples de réalisation, donnés à titre illustratif et nullement limitatif, annexée des figures qui représentent :
- Figure 1, une vue de dessus d'une grille supportant les contacts « physiques » avec un lecteur de carte externe,
- Figure 2A et 2B, une vue de dessus et de dessous du substrat flexible comprenant un circuit électrique sur chaque face,
- Figure 3, une vue de dessus du substrat percé de plusieurs orifices permettant la connexion,
- Figure 4, une vue d'ensemble de plusieurs positions de la grille sur un support au format continu de type S35 avant le report du film souple percé tel que décrit dans la figure 3,
- Figure 5A, une vue de dessus d'un module formé après découpe dans le format décrit par la figure 4 et connexion d'un circuit intégré, figure 5B, une vue en coupe du module en position par rapport à une cavité d'une carte, et
- Figure 6, une variante de réalisation d'un module comprenant deux plaques métalliques.

De façon à bien faire comprendre l'objet de l'invention, la description qui suit est donnée à titre d'exemple non limitatif pour fabriquer un module électronique destiné à être utilisé dans une carte comportant au moins une fonction de transaction (paiement ou autre) avec contact et/ou sans contact.

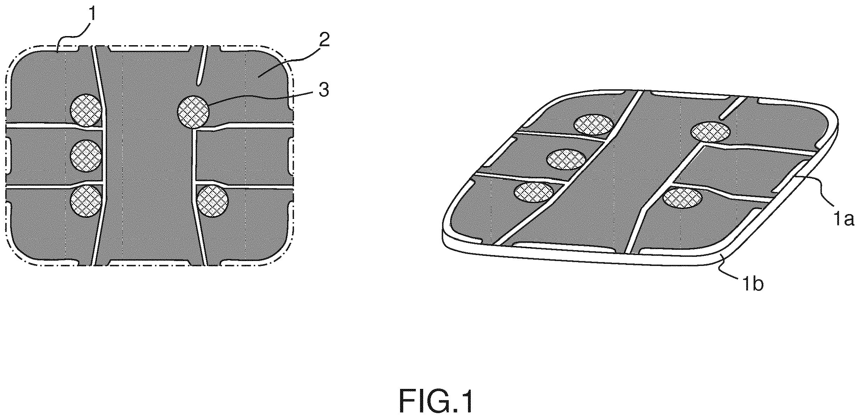

La figure 1 représente une vue de dessus d'un support électriquement conducteur ou grille 1 conçu pour supporter des plages de contact sur une première face 1a, tels que des contacts ISO 2, permettant le dialogue entre une puce et un lecteur externe (non représenté pour des raisons de simplification), les contacts ISO étant connectés via des puits de connexion, 3, à la puce. Le support électriquement conducteur peut être de type support rigide tel qu'une grille de connexion connue sous l'expression anglo-saxonne « lead frame ».

Le métal de la grille est par exemple un alliage cuivreux. La grille 1 peut aussi être en aluminium, présentant une meilleure résistance à la corrosion et une bonne compatibilité avec des procédés de connexion filaire utilisés pour connecter électriquement des plots de connexion avec les contacts ISO. La face contact 1a de la grille (face externe) faisant contact avec les griffes d'un lecteur de carte peut être facilement métallisée avec un procédé de métallisation essentiellement chimique de type « electroless ».

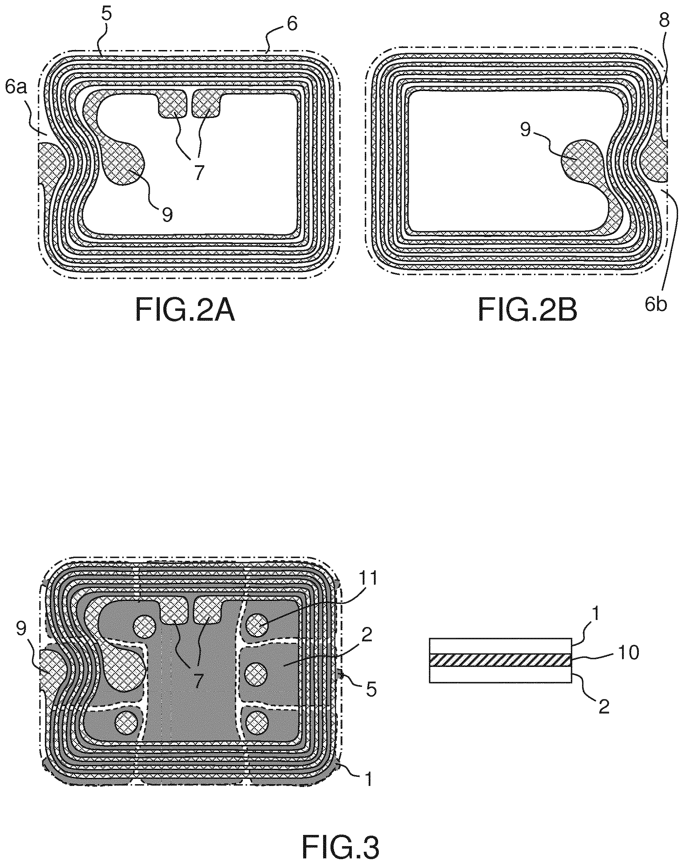

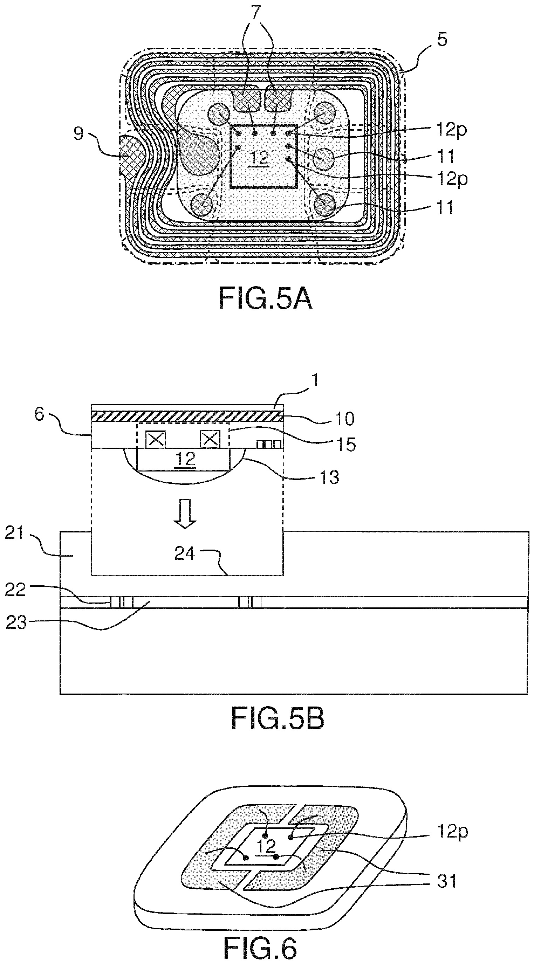

La figure 2A représente un substrat de type support en plastique souple faible coût 6 comportant sur une première face 6a une antenne 5 (zone électriquement conductrice). Le support faible coût peut être réalisé en polyéthylène téréphtalate ou PET, ou en Polychlorure de vinyle ou PVC. L'antenne 5 dans cet exemple présente plusieurs spires en matériau conducteur réalisées par gravure ou par un procédé additif (procédé où la surface du motif voulu est activée pour permettre la croissance du conducteur dans un second temps ou le report direct du conducteur, par sérigraphie ou transfert, par exemple). La première face 6a comprenant l'antenne 5 comporte deux plages de connexion 7 qui serviront à la connexion d'une puce 12 pour assurer une fonction sans contact. Le couplage entre le module électronique et une antenne enfouie dans la carte se fera dans ce cas par couplage inductif (figure 5B).

La figure 2B représente une deuxième antenne 8 déposée sur la face 6b opposée à la première face 6a du substrat 6. La deuxième antenne 8 est elle-même composée de plusieurs spires dans cet exemple. Les deux antennes 5, 8 (antenne double face) peuvent présenter des caractéristiques techniques identiques ou différentes selon les applications envisagées. Les deux faces du substrat sont connectées électriquement par sertissage 9 entre des mors avec force et ultrasons, connue sous l'expression anglo-saxonne « crimp ».

La technologie pour la réalisation des antennes peut être la gravure en grande laize (quelques dizaines de cm à plusieurs mètres) d'un complexe à deux couches d'aluminium sur un diélectrique PET. Les deux couches conductrices seront ensuite interconnectées par « crimp ».

Il est possible d'utiliser comme matériaux conducteurs du cuivre ou de l'encre argent. La réalisation des antennes se fera, par exemple, par croissance additive du matériau conducteur selon le modèle (pattern) choisi ou toute autre technologie disponible.

Une couche d'adhésif 10 est déposée sur le substrat et faible coût afin de permettre de le fixer sur la grille.

On perfore ensuite l'ensemble formé par le support « adhésivé » de plusieurs orifices 11 ou puits de soudure qui vont être utilisés pour connecter la puce aux plots ISO de la grille, assurant une fonction avec contact. L'étape de perforation peut être réalisée avant ou après le dépôt de la couche adhésive. Lorsque la couche adhésive est déposée après perforation du substrat, la couche adhésive sera pré-perforée. La position des orifices est choisie en fonction de la position des contacts disposés sur la face externe de la grille.

Dans l'exemple donné (figure 3), le nombre d'orifices 11 est de cinq pour la fonction avec contact et le nombre des plages de connexion (sans contact) 7 est de deux pour la fonction sans contact. Le nombre de plages de connexion est choisi en fonction de l'application.

Le support « adhésivé » et perforé est ensuite collé sur la face cachée 1b de la grille, la face qui ne comporte pas la finition pour la connexion ISO. La couche adhésive 10, éventuellement multicouche, avec une âme résistante, permet notamment d'isoler électriquement le métal (couche ISO) de l'antenne dans le cas d'une antenne double face. Le vernis de gravure peut avoir été conservé au moins pour cette face afin d'assurer son isolement électrique. Les orifices 11 laissent apparaître les zones de câblage pour constituer des puits de soudure pour la connexion électrique de la puce 12.

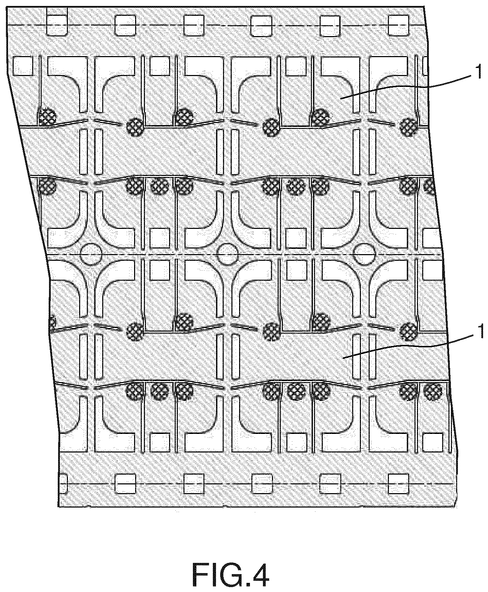

La figure 4 illustre, un exemple de plusieurs positions de la grille sur un support au format continu de type S35, format Super 35mm, connu de l'homme du métier, sur laquelle on va venir reporter un film souple avec ses conducteurs, percé et peu coûteux selon le procédé exposé ci-avant.

L'étape suivante, figure 5A, consiste à coller un circuit intégré ou puce 12 sur le substrat souple ou au niveau du substrat souple selon des principes connus de l'homme du métier. Par exemple, la puce 12 pourrait être positionnée au niveau d'une ouverture 15 (représentée en pointillés en figure 5B) dans le support plastique afin de gagner en épaisseur. La puce 12 est ensuite connectée aux plages de connexion 7 correspondant aux extrémités de l'antenne afin d'assurer la fonction sans contact et via les puits de soudure 11 avec les plots de contact 12p de la puce afin d'assurer la fonction avec contact. Une résine d'encapsulation 13 et de protection est déposée, afin d'englober la puce et les connexions.

L'exécution des étapes décrites ci-dessus permet d'obtenir un module électronique dual interface avec antenne qui est compatible avec un procédé d'encartage.

La figure 5B représente en coupe le positionnement d'un module électronique fabriqué par le procédé de l'invention au-dessus d'une cavité d'une carte 21 comprenant une antenne 22 (circuit électrique) disposée sur un support 23 afin d'assurer une fonction sans contact. La géométrie et les dimensions de la cavité 24 sont choisies par exemple en fonction de la dimension du module électronique.

Selon une variante de réalisation, figure 6, le support du module électronique présente une certaine épaisseur, par exemple 350-400µm, permettant la présence de deux zones électriquement conductrices 31 (matériau métallique) remplaçant l'antenne 5 en forme de spires du module électronique. Le couplage entre le module électronique et l'antenne enfouie dans une carte se fait alors par couplage capacitif.

Les contacts dans l'exemple donné vérifient les normes ISO, mais pourraient aussi être d'autres contacts adaptés à d'autres applications.

Selon une variante de réalisation, l'antenne est remplacée par deux plots de connexion adaptés à être connectés à l'antenne située dans un corps de carte. Différentes technologies peuvent être utilisées, par exemple, des technologies classiques avec Film d'adhésif d'encartage conducteur anisotropique ou ACF, ou avec bossage conducteur ou Bump, ou encore en utilisant une colle conductrice, ou une soudure, entre les surfaces métalliques 31 et les bornes de l'antenne à coeur dans le corps de carte.

Les étapes décrites sont exécutées pour la fabrication de modules pour cartes dual ou hybrides comprenant une puce et utilisées pour des transactions bancaires. Le procédé selon l'invention et le module obtenu peuvent aussi être utilisés dans le domaine de l'identité, pour des passeports par exemple, ou dans tout autre domaine utilisant de telles objets portatifs.

Le module électronique obtenu par l'invention présente un faible coût de fabrication.

Le produit peut être décliné avec flexibilité pour être compatible avec toutes les technologies de fabrications de cartes dual interfaces connues.

## Revendications

1. - Procédé de fabrication d'un ou plusieurs modules électroniques (20) **caractérisé en ce qu'**il comporte au moins les étapes suivantes :
Utiliser :
Un substrat souple (6) comportant plusieurs orifices de connexion (11) traversant et sur une première face (6a) au moins une zone (5) électriquement conductrice, aux extrémités de laquelle se trouvent une ou plusieurs plages de connexion (7), et une deuxième face (6b), et
Un support électriquement conducteur (1) comportant sur une première face (1a), une ou plusieurs zones de connexion (3), et une deuxième face (1b),
Assembler la deuxième face (6b) dudit substrat souple (6) à ladite deuxième face (1b) dudit support électriquement conducteur (1) au moyen d'une couche adhésive,
Positionner un circuit intégré (12) sur ou au niveau de la première face (6a) dudit substrat (6),
Connecter un ou plusieurs contacts (12p) dudit circuit intégré (12) à la ou aux zones de connexion (3) via lesdits orifices de connexion (11), et aux plages de connexion (7),
Déposer une couche de protection (13) au niveau du circuit intégré.

2. - Procédé de fabrication selon la revendication 1 **caractérisé en ce que** l'on assemble le substrat souple au support électriquement conducteur avant de perforer l'ensemble formé par le substrat et la couche adhésive.

3. - Procédé selon l'une des revendications 1 ou 2 **caractérisé en ce que** la zone électriquement conductrice (5) est constituée de plusieurs spires formant une antenne.

4. - Procédé selon la revendication 3 **caractérisé en ce que** les spires sont constituées d'aluminium.

5. - Procédé selon la revendication 3 **caractérisé en ce que** les spires sont constituées de cuivre.

6. - Procédé selon la revendication 3 **caractérisé en ce que** les spires sont constituées de matière électriquement conductrice imprimée.

7. - Procédé selon l'une des revendications 1 ou 2 **caractérisé en ce que** la zone électriquement conductrice (5) est formée d'au moins deux zones de matériau conducteur (31) disposées autour du circuit intégré.

8. - Procédé selon l'une des revendications précédentes **caractérisé en ce que** l'on utilise un substrat en polyéthylène téréphtalate (PET) ou en Polychlorure de vinyle (PVC).

9. - Module électronique **caractérisé en ce qu'**il comporte au moins les éléments suivants :
• Un substrat souple (6) comprenant sur une première face (6a) au moins une zone électriquement conductrice (5), aux extrémités de laquelle se trouvent une ou plusieurs plages de connexion (7), et une deuxième face (6b), plusieurs orifices (11) de connexion traversant,
• Un support électriquement conducteur (1) comportant sur une première face (1a) une ou plusieurs zones de connexion (3), et une deuxième face (1b),
• Ledit substrat souple (6) est fixé via ladite deuxième face (6b) à ladite deuxième face (1b) dudit support électriquement conducteur (1) au moyen d'une couche adhésive,
• Un circuit intégré (12) disposé sur ou au niveau de la première face (6a) du substrat (6), ledit circuit intégré (12) étant relié via un ou plusieurs plots (12p) à la au moins une zone électriquement conductrice (5) via lesdits orifices de connexion (11),
• Une couche de protection (13) au niveau au moins du circuit intégré.

10. - Module électronique selon la revendication 9 **caractérisé en ce que** le substrat est en polyéthylène téréphtalate (PET), ou en Polychlorure de vinyle (PVC).

11. - Module électronique selon l'une des revendications 9 ou 10 **caractérisé en ce que** la zone électriquement conductrice (5) est une antenne formée par au moins une spire déposée sur au moins une face du substrat.

12. - Module électronique selon l'une des revendications 9 ou 10 **caractérisé en ce que** la zone électriquement conductrice (5) est formée d'au moins deux zones de matériau conducteur (31) disposées autour du circuit intégré.

13. - Carte comprenant un module électronique selon l'une des revendications 9 à 12 disposé dans une cavité (13) de la carte et une antenne déposée dans le corps de la carte.

## Patentansprüche

1. - Verfahren zur Herstellung eines oder mehrerer elektronischer Module (20), **dadurch gekennzeichnet, dass** es mindestens die folgenden Schritte umfasst:
Die Benutzung:
Eines flexiblen Substrats (6) mit mehreren durchgehenden Anschlussöffnungen (11), einer ersten Seite (6a) mit mindestens einem elektrisch leitfähigen Bereich (5), an dessen Enden sich eine oder mehrere Anschlussflächen (7) befinden, und einer zweiten Seite (6b), und
Eines elektrisch leitfähigen Trägers (1), der eine erste Seite (1a) mit einem oder mehreren Anschlussbereichen (3) und eine zweite Seite (1b) umfasst,
Das Zusammenfügen der zweiten Seite (6b) des flexiblen Substrats (6) und der zweiten Seite (1b) des elektrisch leitfähigen Trägers (1) mittels einer Klebeschicht,
Das Positionieren eines integrierten Schaltkreises (12) auf oder an der ersten Seite (6a) des Substrats (6),
Das Anschließen eines oder mehrerer Kontakte (12p) des integrierten Schaltkreises (12) an dem oder den Anschlussbereich(en) (3) über die Anschlussöffnungen (11), und an den Anschlussflächen (7),
Das Auftragen einer Schutzschicht (13) auf den integrierten Schaltkreis.

2. - Herstellungsverfahren nach Anspruch 1, **dadurch gekennzeichnet, dass** man das flexible Substrat und den elektrisch leitenden Träger zusammenfügt, bevor man die aus dem Substrat und der Klebeschicht gebildete Einheit perforiert.

3. - Verfahren nach einem der Ansprüche 1 oder 2, **dadurch gekennzeichnet, dass** der elektrisch leitfähige Bereich (5) aus mehreren Windungen besteht, die eine Antenne bilden.

4. - Verfahren nach Anspruch 3, **dadurch gekennzeichnet, dass** die Windungen aus Aluminium bestehen.

5. - Verfahren nach Anspruch 3, **dadurch gekennzeichnet, dass** die Windungen aus Kupfer bestehen.

6. - Verfahren nach Anspruch 3, **dadurch gekennzeichnet, dass** die Windungen aus gedrucktem, elektrisch leitfähigem Material bestehen.

7. - Verfahren nach einem der Ansprüche 1 oder 2, **dadurch gekennzeichnet, dass** der elektrisch leitfähige Bereich (5) aus mindestens zwei Bereichen aus leitfähigem Material (31) gebildet wird, die um den integrierten Schaltkreis herum angeordnet sind.

8. - Verfahren nach einem der vorhergehenden Ansprüche, **dadurch gekennzeichnet, dass** ein Substrat aus Polyethylenterephthalat (PET) oder Polyvinylchlorid (PVC) verwendet wird.

9. - Elektronisches Modul, **dadurch gekennzeichnet, dass** es mindestens die folgenden Elemente umfasst:
• Ein flexibles Substrat (6) mit einer ersten Seite (6a) mit mindestens einem elektrisch leitfähigen Bereich (5), an dessen Enden sich eine oder mehrere Anschlussflächen (7) befinden, und einer zweiten Seite (6b), wobei es mehrere durchgehende Anschlussöffnungen (11) umfasst,
• Einen elektrisch leitfähigen Träger (1), der eine erste Seite (1a) mit einem oder mehreren Anschlussbereichen (3) und eine zweite Seite (1b) umfasst,
• Das flexible Substrat (6) wird über die zweite Seite (6b) mittels einer Klebeschicht an der zweiten Seite (1b) des elektrisch leitfähigen Trägers (1) befestigt,
• Einen integrierten Schaltkreis (12), der auf oder an der ersten Seite (6a) des Substrats (6) angeordnet ist, wobei der integrierte Schaltkreis (12) über einen oder mehrere Kontakte (12p) mit dem mindestens einen elektrisch leitfähigen Bereich (5) über die Anschlussöffnungen (11) verbunden ist,
• Eine Schutzschicht (13) zumindest auf dem integrierten Schaltkreis.

10. - Elektronisches Modul nach Anspruch 9, **dadurch gekennzeichnet, dass** das Substrat aus Polyethylenterephthalat (PET) oder aus Polyvinylchlorid (PVC) besteht.

11. - Elektronisches Modul nach einem der Ansprüche 9 oder 10, **dadurch gekennzeichnet, dass** der elektrisch leitfähige Bereich (5) eine Antenne ist, die durch mindestens eine Windung gebildet wird, die auf mindestens einer Seite des Substrats angebracht ist.

12. - Elektronisches Modul nach einem der Ansprüche 9 oder 10, **dadurch gekennzeichnet, dass** der elektrisch leitfähige Bereich (5) aus mindestens zwei Bereichen aus leitfähigem Material (31) gebildet wird, die um den integrierten Schaltkreis herum angeordnet sind.

13. - Karte mit einem elektronischen Modul nach einem der Ansprüche 9 bis 12, das in einem Hohlraum (13) der Karte angeordnet ist, und einer Antenne, die im Körper der Karte angebracht ist.

## Claims

1. - A method of manufacturing one or more electronic modules (20), **characterised in that** it comprises at least the following steps:
Using:
A flexible substrate (6) comprising a plurality of connection holes (11) passing through and on a first side (6a) at least one electrically conductive area (5), at the ends of which are one or more connection pads (7), and a second side (6b), and
An electrically conductive support (1) comprising, on a first side (1a), one or more connection areas (3), and a second side (1b),
Joining the second side (6b) of said flexible substrate (6) to said second side (1b) of said electrically conductive support (1) by means of an adhesive layer,
Positioning an integrated circuit (12) on or at the first side (6a) of said substrate (6),
Connecting one or more contacts (12p) of said integrated circuit (12) to the connection area(s) (3) via said connection holes (11), and to the connection pads (7),
Applying a protective layer (13) to the integrated circuit.

2. - The manufacturing method according to claim 1, **characterised in that** the flexible substrate is joined to the electrically conductive support before perforating the assembly formed by the substrate and the adhesive layer.

3. - The method according to any of claims 1 or 2, **characterised in that** the electrically conductive area (5) consists of several turns forming an antenna.

4. - The method according to claim 3, **characterised in that** the turns consist of aluminium.

5. - The method according to claim 3, **characterised in that** the turns consist of copper.

6. - The method according to claim 3, **characterised in that** the turns consist of printed electrically conductive material.

7. - The method according to either of claims 1 or 2, **characterised in that** the electrically conductive area (5) is formed of at least two areas of conductive material (31) arranged around the integrated circuit.

8. - The method according to any of the above characteristics, **characterised in that** a substrate made of polyethylene terephthalate (PET) or polyvinyl chloride (PVC) is used.

9. - An electronic module, **characterised in that** it comprises at least the following elements:
• A flexible substrate (6) comprising on a first side (6a) at least one electrically conductive area (5), at the ends of which are one or more connection pads (7), and a second side (6b), several connection holes (11) passing through,
• An electrically conductive support (1) comprising, on a first side (1a) one or more connection areas (3) and a second side (1b),
• Wherein said flexible substrate (6) is fixed via said second side (6b) to said second side (1b) of said electrically conductive support (1) by means of an adhesive layer,
• An integrated circuit (12) arranged on or qt the first side (6a) of the substrate (6), wherein said integrated circuit (12) is connected via one or more studs (12p) to the at least one electrically conductive area (5) via said connection holes (11),
• A protective layer (13) at least on the integrated circuit.

10. - The electronic module according to claim 9, **characterised in that** the substrate is made of polyethylene terephthalate (PET) or polyvinyl chloride (PVC).

11. - The electronic module according to either of claims 9 or 10, **characterised in that** the electrically conductive area (5) is an antenna formed by at least one turn arranged on at least one side of the substrate.

12. - The electronic module according to either of claims 9 or 10, **characterised in that** the electrically conductive area (5) is formed by at least two areas of conductive material (31) arranged around the integrated circuit.

13. - A card comprising an electronic module according to any of claims 9 to 12 arranged in a cavity (13) of the card and an antenna arranged in the body of the card.
